(19)

Europäisches
Patentamt
European
Patent Office
Office européen
des brevets

(11) **EP 1 785 443 A1**

(12) **EUROPEAN PATENT APPLICATION**
published in accordance with Art. 158(3) EPC

(43) Date of publication:
**16.05.2007 Bulletin 2007/20**

(51) Int Cl.:
*C08G 63/85* (2006.01)     *B32B 27/36* (2006.01)

(21) Application number: **05776807.9**

(22) Date of filing: **30.08.2005**

(86) International application number:
**PCT/JP2005/015692**

(87) International publication number:
**WO 2006/025344 (09.03.2006 Gazette 2006/10)**

(84) Designated Contracting States:
**DE FR GB**

(30) Priority: **30.08.2004 JP 2004249448**
          **10.09.2004 JP 2004263444**
          **10.09.2004 JP 2004263445**
          **10.09.2004 JP 2004263446**
          **21.12.2004 JP 2004369007**

(71) Applicant: **Mitsubishi Polyester Film Corporation**
**Tokyo 108-0014 (JP)**

(72) Inventors:
 • **SUZUKI, Kanae,c/o**
   **Central Research Laboratory**
   **Maihara-shi, Shiga-ken 5210234 (JP)**

 • **MIKI, Takatoshi,**
   **c/o Central Research Laboratory**
   **Maihara-shi, Shiga-ken 5210234 (JP)**
 • **IKEYAMA, Koichi,**
   **c/o Central Research Laboratory**
   **Maihara-shi, Shiga-ken 5210234 (JP)**

(74) Representative: **TER MEER - STEINMEISTER &**
**PARTNER GbR**
**Mauerkircherstrasse 45**
**81679 München (DE)**

(54) **POLYESTER FILMS FOR RELEASE**

(57)     The present invention relates to a release polyester film, a release polyester film for protecting a liquid crystal display panel, a polyester film for a protective film and a polyester film for an optical film which each include a polyester layer containing a titanium compound and a phosphorus compound in amounts satisfying the following formulae (1) and (2) at the same time; as well as a polyester film for a release film which includes a polyester layer containing a titanium compound and a phosphorus compound in amounts satisfying the following formulae (1) and (2) at the same time in which a change in an orientation angle in the film is not more than 3°/500 mm,

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer. Such a polyester film of the present invention can be used in various applications such as releasing of ceramics, is extremely reduced in amount of oligomers precipitated thereon, in particular, even when processed under high-temperature conditions, can be used for protecting a liquid crystal display panel such as a polarizing plate and a phase difference plate, can exhibit a good transparency, is suitable as a protective film used in optical applications such as liquid crystal polarizing plates or displays, can exhibit an excellent appearance, in particular, when used as an optical film, and enables a polarizing plate using the film to be inspected with a high accuracy by a Cross-Nicol method.

EP 1 785 443 A1

**Description**

TECHNICAL FIELD

The present invention relates to a release polyester film, and more particularly, to a release polyester film which can be used in various applications such as releasing for ceramics, is extremely reduced in amount of oligomers precipitated on the surface thereof, in particular, even when processed under high-temperature conditions, can be used for protecting liquid crystal display panels such as polarizing plates and phase difference plates, can exhibit a good transparency, is suitable as a protective film used in optical applications such as liquid crystal polarizing plates and displays, can exhibit an excellent appearance especially when used as an optical film, and can be subjected to high-accuracy inspection by a Cross-Nicol method when applied to a polarizing plate.

BACKGROUND ART

Polyester films typically made of polyethylene terephthalate or polyethylene naphthalate have been extensively used in various applications because of excellent properties thereof such as mechanical strength, dimensional stability, flatness, heat resistance, chemical resistance and optical characteristics as well as excellent cost performance. However, with the increase in application fields, the polyester films are processed and used under various conditions, so that there tends to arise such a problem that upon heat-treating the polyester film, oligomers are oozed and bled from an inside of the film and precipitated on the surface thereof. Severe precipitation of the oligomers on the surface of the film tends to cause contamination of equipments used in the process due to adhesion of the oligomers thereto upon processing the film, resulting in various problems such as inapplicability of the film to those requiring a high transparency.

As the conventional methods of preventing oligomers from being precipitated on the surface of the polyester film, there are known the method of reducing an amount of oligomers contained in a raw polyester material by subjecting the material to solid phase polymerization (for example, refer to Japanese Patent Application Laid-open (KOKAI) No. 2003-119271), the method of enhancing a hydrolysis resistance of the polyester film using a terminal sealing agent, etc. Even though the raw polyester material is subjected to solid phase polymerization, the resultant polyester film still fails to exhibit a satisfactory effect of preventing precipitation of oligomers on the surface thereof, for the reasons such as by-production of oligomers upon heating, etc., depending upon conditions used for producing the film. In addition, with the increased demand for clean films having a less content of impurities or foreign matters, the raw polyester material tends to be usually passed through a fine filter upon melting. If the raw polyester material is subjected to solid phase polymerization to such an extent as to fully reduce the content of oligomers therein, the degree of polymerization of the obtained polymer is also increased simultaneously with reduction in content of the oligomers, so that the pressure applied to the filter tends to be increased upon production of the film, resulting in too large load applied to an extruder, increase in frequency of replacement of the filter and, therefore, poor productivity. On the other hand, when using the terminal sealing agent, there tend to arise problems such as generation of foreign matters due to the terminal sealing agent as well as coloration and deteriorated solid phase polymerizability of the resultant polymer.

Hitherto, release films using a polyester film as a base material have been used in various applications such as protection of liquid crystal display panels and releasing for ceramics. The release films are used as a protective film for protecting an adhesive surface of an adhesive, a bonding agent, a pasting agent, etc., or as a carrier sheet used for molding sheets made of curable resins such as urethane resins, epoxy resins and unsaturated polyester resins, or ceramic sheets. Thus, the amount of the release films demanded has been more and more increased. Upon using the release films, there tends to arise such a problem that various inconveniences are caused in the production process thereof owing to oligomers precipitated on the surface of a release layer or on the surface where no release layer is provided, when exposed to high-temperature conditions. For example, the release film used for releasing of ceramics, is produced by the process which includes steps of coating a ceramic slurry on a surface of the release film, drying the ceramic material to form a green sheet, and then winding up the green sheet in the form of a laminate with the release film into a roll. It is consider that the oligomers are precipitated upon the drying step after coating the slurry. The oligomers precipitated on the surface of the release layer are transferred onto the surface of the green sheet contacting the release surface. If the green sheet onto which the oligomers are transferred and adhered is used for producing, for example, a ceramic laminated capacitor, there tend to arise problems such as deteriorated interlaminar adhesion strength between the green sheets upon laminating these sheets with each other. In addition, the oligomers precipitated on the surface where no release layer is provided, tend to be further transferred and adhered onto the surface of transporting rolls. If the process is further continued using the transporting rolls onto which the oligomers are adhered, the surface of the transporting rolls suffers from deposition of the oligomers, resulting in severe contamination of the rolls. In recent years, for the purpose of preventing increase in production costs owing to increased productivity, the temperature used in the production process, in particular, in the drying step, tends to be set to a higher value with a high-speed processing, so that the above problem concerning precipitation of oligomers tends to become more remarkable.

Conventionally, release films using a polyester film as a base material have been used in various applications such as protection of liquid crystal display panels and releasing for ceramics. Upon use of the release films, there tend to be caused various inconveniences in the production process thereof owing to oligomers precipitated on the surface of a release layer or on the surface thereof where no release layer is provided, when exposed to high-temperature conditions.

For example, when the release film is used for protecting liquid crystal display panels, the production process includes steps of laminating the release film onto a polarizing base material through an adhesive layer, drying the resultant laminate and then winding up the laminate into a roll. In this case, it is considered that precipitation of oligomers is caused in the drying step after coating the adhesive. The oligomers precipitated on the surface of the release layer are transferred onto the surface of the adhesive layer as a counter part onto which the release layer is laminated. If the polarizing base material with the adhesive layer onto which the oligomers are adhered, is laminated on a glass plate to produce LCD, the obtained LCD tends to suffer from inconveniences such as too low brightness. In recent years, the brightness of a display screen of LCD tends to be increased for the purpose of enhancing a visibility of the LCD. Therefore, the above inconvenience concerning brightness tends to raise significant problems for the LCD.

Further, the release films are sometimes required to exhibit a good transparency depending upon the applications thereof. The inspection step upon production of polarizing plates or phase difference plates is an example of such applications requiring a good transparency of the release films. In the inspection step, in order to prevent output of defectives, the products are presently inspected by naked eyes or using a magnifying glass. When the transparency of the release film is insufficient, foreign matters included in these products tend to be overlooked, resulting in problems such as increased rate of output of defectives.

Conventionally, polyester films have been used for protection of optical products such as liquid crystal polarizing plates and displays such as cathode ray tubes or PDP. The polyester films used in these applications have also been recently required to exhibit strict film properties. For example, when used as a protective film, the resultant product tends to have a poor appearance owing to presence of foreign matters such as oligomers precipitated on the surface of the film.

In particular, in recent years, the polyester films have been extensively used in various optical applications such as base films for prism sheets used in transparent touch panels and liquid crystal displays, and base films for protective films having functional layers for imparting thereto various functions such as antistatic property, antireflection property and electromagnetic shielding property which are attached onto the surface of a front glass panel of a so-called flat display such as cathode ray tubes, LCD and PDP. However, the polyester films tend to readily suffer from scuffs or flaws, resulting in problems such as poor appearance and deteriorated optical characteristics.

In the above optical applications, in order to prevent the surface of the polyester film from being damaged, an activation energy radiation-curable resin layer has been generally provided on the surface of the film. In addition, in order to enhance adhesion between the activation energy radiation-curable resin layer and the optical polyester film, an adhesive layer exhibiting a good adhesion property to the activation energy radiation-curable resin layer is suitably provided on the polyester film. However, the provision of the adhesive layer tends to further promote precipitation of oligomers on the surface of the polyester film. As a result, there tend to arise various problems owing to the oligomers such as poor transparency and deteriorated adhesion between the coating film layer and the polyester film, depending upon heat history during the processing step.

Also, with the recent increasing demand for portable information terminal equipments (PDA), electrically conductive circuits formed therein are remarkably required to have a highly precise structure to achieve both reduction in weight and size and a high performance. For this reason, it is also essentially required that a base film used for the circuits is enhanced in dimensional stability when subjected to annealing treatment before and after forming the activation energy radiation-curable resin layer thereon. At the same time, there tends to arise such a problem that the base film suffers from poor appearance owing to precipitation of oligomers on the surface thereof.

With the recent rapid spread of portable telephones and personal computers, the demand for liquid crystal displays (LCD) capable of realizing reduction in thickness and weight, low power consumption and a high image quality tends to be remarkably increased as compared to CRT as the conventional display. Also, progress of techniques for enlarging an image screen of LCD also becomes remarkable. The LCD having a large image screen has been recently applied, for example, to large-size TVs having a size of 30 inches or more. The LCD having a large image screen as well as a high brightness has been frequently achieved by enhancing a brightness of a backlight incorporated into a LCD unit, or by incorporating a film capable of improving the brightness of LCD into the LCD unit.

The release film used, for example, for protecting a liquid crystal display panel, is produced by such a process including steps of laminating the release film on a polarizing base material through an adhesive layer, drying the obtained laminate and then winding up the laminate into a roll, etc. In this case, it is considered that precipitation of oligomers on the surface of the release film is caused in a drying step after coating the adhesive onto the film. The oligomers precipitated on the surface of the release layer is transferred onto the surface of the adhesive layer as a counter part on which the release layer is laminated. Therefore, if the polarizing base material with the adhesive layer onto which the oligomers are adhered, is laminated on a glass base plate to produce LCD, there tend to arise inconveniences such as deteriorated brightness of the resultant LCD.

In recent years, in order to improve a visibility of LCD, a brightness of a display screen of the LCD tends to be further increased, so that the above inconveniences tend to be more significant. In addition, in such a so-called high-brightness type LCD, small luminescent spots being present in the display tend to frequently cause problems. In constitutional elements incorporated in the high-brightness type LCD such as a polarizing plate, a phase difference plate and a phase difference polarizing plate, even fine foreign matters which can be substantially ignored in the conventional low-brightness type LCD tend to cause significant problems. Therefore, it has been important to not only prevent foreign matters from being intruded into these elements of LCD during the production process, but also improve an inspection technique therefor so as to surely recognize defectives into which the foreign matters are intruded, even when intrusion of the foreign matters occurs unexpectedly.

For example, defective polarizing plates are generally examined by visual inspection using a Cross-Nicol method. Further, polarizing plates used in large-size TVs having a size of 40 inches or more have also been examined by an automatic foreign matter inspection apparatus using a Cross-Nicol method. The Cross-Nicol method is such a method in which two polarizing plates are disposed such that orientation main axes thereof are perpendicular to each other to keep them in a quenching state, and when any foreign matters or defects are present therein, luminescent spots are observed at the corresponding positions of the polarizing plates, thereby enabling visual inspection of defectives. In the above inspection, as the respective polarizing plates, there is used a polyester film on which a release layer is provided through an adhesive layer. Therefore, the above Cross-Nicol inspection is carried out under such a condition that the release polyester film is sandwiched between the two polarizing plates. However, in general, when the release polyester film is used for the above purpose, the inspection using the Cross-Nicol method tends to be disturbed thereby, resulting in such a problem that intrusion of foreign matters or defects are likely to be overlooked.

Regarding the above problems, there has been proposed such a technique in which when a retardation value of a laminate composed of two polarizing plates and a polyester film sandwiched therebetween lies within a specific range, an inspection capability thereof can be improved (refer to Japanese Patent Application Laid-open (KOKAI) No. 2000-338327). However, even in the technique, there tends to still arise such a problem that inspection of defects is not surely carried out.

Further, when a transparency of the release film is insufficient, inclusion of foreign matters in products tends to be overlooked. Therefore, there also tends to arise problems such as increased rate of output of defective products.

## DISCLOSURE OF THE INVENTION

### Problem to be Solved by the Invention

The present invention has been made to solve the above problems. An object of the present invention is to provide (1) a release polyester film which can be used in various applications such as releasing for ceramics, and is extremely reduced in amount of oligomers precipitated thereon; (2) a release polyester film which can be used for protecting liquid crystal display panels such as a polarizing plate and a phase difference plate, is extremely reduced in amount of oligomers precipitated thereon, and can exhibit a good transparency; (3) a polyester film which is reduced in amount of oligomers precipitated thereon, and is suitable as a protective film used in optical applications such as, in particular, liquid crystal polarizing plates or displays; (4) a film which is extremely reduced in amount of oligomers precipitated on the surface thereof even when processed under high-temperature conditions, and is excellent in appearance, in particular, when used as an optical film; and (5) a polyester film for a release film which enables a polarizing plate to be inspected with a high accuracy by a Cross-Nicol method.

### Means for Solving Problem

As a result of the present inventors' earnest study in view of the above problems, it has been found that the above conventional problems can be solved by a polyester film having a polyester layer containing a titanium compound and a phosphorus compound in specific amounts. The present invention has been attained on the basis of this finding.

That is, in the first aspect of the present invention, there is provided a release polyester film comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer.

In a second aspect of the present invention, there is provided a release polyester film for protecting a liquid crystal display panel, comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and Wp represents a content (ppm) of a phosphorus element in the polyester layer.

In a third aspect of the present invention, there is provided a polyester film for a protective film, comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and Wp represents a content (ppm) of a phosphorus element in the polyester layer.

In a forth aspect of the present invention, there is provided a polyester film for an optical film, comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer.

In a fifth aspect of the present invention, there is provided a polyester film for a release film, comprising a polyester layer containing a titanium compound and a phosphorus compound in amounts satisfying the following formulae (1) and (2) at the same time:

$$0 < W_{Ti} \leq 20 \qquad (1)$$

**EP 1 785 443 A1**

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer,
a change in an orientation angle in the film being not more than 3°/500 mm.

EFFECT OF THE INVENTION

The release polyester film according to the present invention can be used in various applications such as releasing of ceramics, is extremely reduced in amount of oligomers precipitated thereon, in particular, even when processed under high-temperature conditions, can be used for protecting a liquid crystal display panel such as a polarizing plate and a phase difference plate, can exhibit a good transparency, is suitable as a protective film used in optical applications such as liquid crystal polarizing plates or displays, can exhibit an excellent appearance, in particular, when used as an optical film, and can allow a polarizing plate using the film to be inspected with a high accuracy by a Cross-Nicol method.

PREFERRED EMBODIMENTS FOR CARRYING OUT THE INVENTION

The present invention is described in detail below.
The polyester films described in the first to fifth aspects of the present invention are in the form of a film obtained by cooling a molten polyester sheet melt-extruded from an extrusion mouthpiece (die) by a so-called extrusion method, if required, followed by stretching the sheet. Meanwhile, the "polyester films described in the first to fifth aspects of the present invention" are respectively hereinafter referred to merely as a "polyester film" or a "film".
A polyester forming the film of the present invention is obtained by polycondensing an aromatic dicarboxylic acid with an aliphatic glycol. Examples of the aromatic dicarboxylic acid may include terephthalic acid and 2,4-naphthalenedicarboxylic acid. Examples of the aliphatic glycol may include ethyleneglycol, diethyleneglycol and 1,4-cyclohexane dimethanol. Typical examples of the polyester may include polyethylene terephthalate (PET) and polyethylene-2,6-naphthalenedicarboxylate (PEN). The polyester used in the present invention may be in the form of either a homopolyester or a copolyester. The copolyester may be in the form of a copolymer containing a third component in an amount of not more than 30 mol%.
Examples of the dicarboxylic acid component of such a copolyester may include at least one acid selected from the group consisting of isophthalic acid, phthalic acid, terephthalic acid, 2,6-naphthalenedicarboxylic acid, adipic acid, sebacic acid, and oxycarboxylic acids such as p-oxybenzoic acid. Examples of the glycol component of the copolyester may include at least one glycol selected from the group consisting of ethyleneglycol, diethyleneglycol, propyleneglycol, butanediol, 1,4-cyclohexane dimethanol and neopentylglycol.
It is required that at least one layer constituting the polyester film of the present invention contains both a titanium compound and a phosphorus compound. The content of a titanium element in the at least one layer constituting the film of the present invention is required to be not more than 20 ppm and preferably not more than 10 ppm. The lower limit of the content of the titanium element is usually 1 ppm and preferably 2 ppm. When the content of the titanium compound in the polyester is too large, oligomers tend to be by-produced in the step of melt-extruding the polyester, thereby failing to obtain a film having a low oligomer content and a high transparency. When no titanium element is contained in the polyester, productivity of the raw polyester material tends to be lowered, thereby failing to obtain such a raw polyester material having a polymerization degree as aimed. On the other hand, the content of the phosphorus element in the polyester layer is required to be not less than 1 ppm and preferably not less than 5 ppm. The upper limit of the phosphorus content is 300 ppm, preferably 200 ppm and more preferably 100 ppm. When the above specific amount of the titanium compound is contained in the polyester and further the phosphorus compound is contained therein, a remarkable effect of reducing an amount of the oligomers contained therein can be exhibited. When the content of the phosphorus compound in the polyester is too large, the phosphorus compound tends to be gelled and form foreign matters, resulting in deterioration in quality of the obtained film. In the present invention, when the titanium compound and the phosphorus compound are contained in the above specific ranges, the oligomers can be prevented from being by-produced, so that the effects of the present invention can be highly achieved.
In addition, the polyester layer containing the titanium compound and the phosphorus compound preferably contains substantially no antimony element. The content of the antimony element in the polyester layer is usually not more than 100 ppm, preferably not more than 60 ppm and most preferably substantially zero ppm, i.e., not more than 10 ppm. When the content of the antimony element in the polyester layer is too large, the antimony element tends to undergo reduction reaction by the phosphorus compound upon melt-extrusion and, therefore, tends to be agglomerated

6

together, resulting in generation of foreign matters in the film and blackish coloration thereof as well as poor transparency.

In the polyester film of the present invention, the polyester forming the polyester layer containing the titanium compound and the phosphorus compound in the above-specified ranges may be produced by melt-polymerization reaction. Alternatively, after the melt-polymerization, the obtained polyester is preferably formed into chips and then subjected to solid-phase polymerization to obtain a raw polyester material having a less oligomer content.

In the polyester film of the present invention, the content of the oligomers in the polyester layer containing the titanium compound and the phosphorus compound in the above-specified ranges, is preferably not more than 0.7% by weight, more preferably not more than 0.5% by weight and still more preferably not more than 0.3% by weight. When the content of the oligomers in the polyester layer is limited to such a small level, it is possible to reduce an amount of the oligomers contained in the polyester film of the present invention and highly exhibit an effect of preventing precipitation of the oligomers on the surface of the film.

The polyester film of the present invention may have such a laminated structure in which the polyester having a less oligomer content is co-extruded and laminated on at least one surface of a polyester layer having an ordinary oligomer content. The film having the above laminated structure can highly exhibit the effect of preventing precipitation of the oligomers on the film as aimed by the present invention.

In the present invention, the amount of the oligomers precipitated on the surface of the film when heat-treating the film at 180°C for 10 min is usually not more than 5.0 $mg/m^2$, preferably not more than 3.0 $mg/m^2$ and more preferably not more than 1.0 $mg/m^2$. In addition, the amount of the oligomers being present on the surface of the film after coating methyl ethyl ketone onto the film, drying the coating layer, and then heat-treating the resultant film at 180°C for 10 min, is not more than 5.0 $mg/m^2$, preferably not more than 3.0 $mg/m^2$ and more preferably not more than 1.0 $mg/m^2$. The amount of the oligomers used herein means an amount of cyclic trimers (polyester-derived oligomers) as measured by the below-mentioned method. When the amount of the oligomers precipitated on the surface of the film is more than 5.0 $mg/m^2$, there tend to arise problems such as poor haze of the film and adhesion or deposition of the oligomers onto transporting rolls contacted with the film during the coating step.

The difference ($\Delta H$) between a haze (H) of the film obtained after heat-treating the film at 180°C for 60 min and a haze ($H_0$) of the film before the heat treatment is preferably not more than 5.0%, more preferably not more than 3.0% and still more preferably not more than 1.0%. When the haze difference ($\Delta H$) is more than 5.0%, such a film tends to be unusable in the applications requiring a high transparency, resulting in limited application fields thereof.

The polyester obtained in the present invention may also contain a weather-resisting agent, a light-resisting agent, an antistatic agent, a lubricant, a light-shielding agent, an antioxidant, a fluorescent brightener, a matting agent, a heat stabilizer and a colorant such as dyes and pigments unless the addition thereof adversely affects the aimed effects of the present invention. Further, the polyester may also contain, if required, inorganic or organic fine particles which are inert to the polyester, for the purpose of improving a slip property and an abrasion resistance of the film.

Examples of the inorganic or organic fine particles blended in the film may include fine particles of silicon oxide, alumina, calcium carbonate, kaolin and titanium oxide as well as crosslinked polymer fine particles as described in Japanese Patent Publication (KOKOKU) No. 59-5216(1984). These fine particles may be used alone or in combination of any two or more kinds thereof. The content of the fine particles in the polyester is usually not more than 1% by weight, preferably 0.01 to 1% by weight and more preferably 0.02 to 0.5% by weight. When the content of the fine particles is too small, the resultant film tends to have a too flat surface and, therefore, tends to be deteriorated in winding property during the film forming process. When the content of the fine particles is more than 1% by weight, the resultant film tends to have a too coarse surface, resulting in poor transparency.

The fine particles contained in the polyester film have an average particle diameter of usually 0.02 to 5 $\mu$m, preferably 0.02 to 3 $\mu$m and more preferably 0.02 to 2 $\mu$m, though not particularly limited thereto. When the average particle diameter of the fine particles contained in the polyester film is less than 0.02 $\mu$m, the resultant film tends to have a too flat surface and, therefore, tends to be deteriorated in winding property during the film forming process. When the average particle diameter of the fine particles contained in the polyester film is more than 5 $\mu$m, the resultant film tends to have a too coarse surface, resulting in poor transparency. On the other hand, in the case of a laminated film having two or more layers, in order to improve a transparency of the film, the fine particles are preferably blended in only a surface layer thereof. In this case, the surface layer means at least one of front and rear surface layers. The fine particles may also be blended in both of the front and rear surface layers.

In the present invention, the method of blending the fine particles in the polyester is not particularly limited, and the fine particles may be blended in the polyester by known methods. For example, the fine particles may be added at an optional stage upon production of the polyester. The fine particles are preferably added in the form of a slurry obtained by dispersing the particles in ethyleneglycol, etc., at the esterification stage, or at the stage after completion of esterification or transesterification reaction but before initiation of the polycondensation reaction. Further, there may also be used the method of blending a slurry prepared by dispersing the fine particles in ethyleneglycol or water, with the raw polyester material using a vented kneading extruder, or the method of blending the dried fine particles with the raw polyester material using a kneading extruder.

The thickness of the respective films described in the first, second and fifth aspects of the present invention is not particularly limited as long as it is possible to form a film having such a thickness. The thickness of the film is usually 4 to 50 $\mu$m and preferably 9 to 38 $\mu$m. The thickness of the polyester layer containing titanium and phosphorus elements is preferably not less than 0.5 $\mu$m, more preferably not less than 1 $\mu$m and especially preferably not less than 2 $\mu$m.

The thickness of the film described in the third aspect of the present invention is also not particularly limited as long as it is possible to form a film having such a thickness. The thickness of the film described in the third aspect of the present invention is not less than 24 $\mu$m and preferably not less than 30 $\mu$m from the standpoint of allowing the film to maintain an adequate strength when used as a protective film.

The thickness of the film described in the fourth aspect of the present invention is also not particularly limited as long as it is possible to form a film having such a thickness, and is usually 50 to 300 $\mu$m and preferably 75 to 250 $\mu$m. When the thickness of the film is less than 50 $\mu$m, the resultant film tends to be deteriorated in tenacity, resulting in poor workability upon final inspection conducted every sheet produced by punching or upon attaching the film onto displays. When the thickness of the film is more than 300 $\mu$m, the resultant film tends to exhibit a too high rigidity, resulting in poor workability.

In addition, the thickness of the polyester layer containing the titanium and phosphorus elements is preferably not less than 0.5 $\mu$m, more preferably not less than 1 $\mu$m and especially preferably not less than 2 $\mu$m.

When the film of the present invention is in the form of a laminated film, the polyester layer containing the titanium and phosphorus elements is preferably used as at least an outermost layer thereof. Also, the polyester layer may be used as either one or both of opposite outermost layers of the laminated film, or may be used as an inner layer thereof.

Next, the process for producing the film according to the present invention is explained in detail below. However, the production process is only illustrative and not intended to limit the scope of the present invention. First, the preferable process for producing the polyester used in the present invention is explained below, though not particularly limited thereto. In the below-exemplified process, although polyethylene terephthalate is used as the polyester, it should be noted that the production conditions vary depending upon kind of polyester used. According to an ordinary method, terephthalic acid is esterified with ethyleneglycol, or dimethyl terephthalate is transesterified with ethyleneglycol, thereby obtaining bis-$\beta$-hydroxyethyl terephthalate (BHT). Next, the thus obtained BHT is transferred to a polymerization vessel, heated therein while reducing a pressure, and finally heated under vacuum to 280°C to allow a polymerization reaction thereof to proceed, thereby obtaining the aimed polyester.

The polyester used in the present invention has an intrinsic viscosity of usually 0.40 to 0.90, preferably 0.45 to 0.80 and more preferably 0.50 to 0.70. When the intrinsic viscosity of the polyester is less than 0.40, the resultant film tends to be insufficient in mechanical strength. When the intrinsic viscosity of the polyester is more than 0.90, there tends to occur problems such as too high melt viscosity, large load applied to extruder used, and high production costs.

Next, polyester chips produced by drying the above obtained polyester by a known method are fed to a melt-extrusion apparatus and heated to a temperature not lower than a melting point of the polyester for melting the polyester chips. Then, the thus obtained molten polymer is extruded through a die on a rotary cooling drum and rapidly cooled and solidified thereon to a temperature not higher than a glass transition temperature thereof, thereby obtaining a substantially amorphous unstretched sheet. In this case, in order to improve a flatness of the obtained sheet, it is preferred to enhance adhesion between the sheet and the rotary cooling drum. For this purpose, in the present invention, an electrostatic adhesion method and/or a liquid coating adhesion method are preferably employed. In the present invention, the thus obtained sheet is biaxially stretched to form a stretched film. More specifically, the stretching procedure may be conducted under the following conditions.

That is, the unstretched sheet is preferably stretched in a longitudinal direction thereof at a temperature of 70 to 145°C and a stretch ratio of 2 to 6 times to form a longitudinally monoaxially stretched film, and then the monoaxially stretched film is preferably stretched in a transverse direction thereof at a temperature of 90 to 160°C and a stretch ratio of 2 to 6 times to form a biaxially stretched film. The resultant biaxailly stretched film is further heat-treated at a temperature of 150 to 240°C for 1 to 600 sec. Further, upon the heat treatment, in a maximum heat-treating temperature zone and/or a cooling zone located at an outlet of the heat-treating apparatus, the film is preferably subjected to relaxation by 0.1 to 20% in longitudinal and/or transverse directions thereof. In addition, if required, the thus obtained film may be subjected again to longitudinal and transverse re-stretching steps. Further, the unstretched sheet may be subjected to simultaneous biaxial stretching at an area ratio of 10 to 40 times.

During the stretching step, the film may be surface-treated by a so-called in-line coating method. The in-line coating may be performed as follows though not particularly limited thereto. For example, after completion of the first stage stretching but before initiation of the second stage stretching, for the purpose of improving an antistatic property, a slip property and an adhesion property as well as a secondary processability, the film may be subjected to coating treatments with an aqueous solution, a water-based emulsion, a water-based slurry, etc.

The polyester film described in the fifth aspect of the present invention may also be subjected to a so-called in-line coating procedure unless the procedure adversely affects the effects of the present invention. In the in-line coating

EP 1 785 443 A1

step, in order to improve properties as required such as, for example, an antistatic property, a weather resistance and a surface hardness, the film may be subjected to coating step, if required, after completion of the longitudinal stretching and before an inlet of a tenter for conducting the transverse stretching, and then the resultant coating layer is dried in the tenter. Also, various coats may be formed on the film by an off-line coating method after production of the film. These coats may be formed on either one or both surfaces of the film. The coating material used in the off-line coating method may be either a water-based material or a solvent-based material, whereas the coating material used in the in-line coating method is preferably a water-based material or a water dispersion-based material.

In the case where the polyester film described in any of the first to fifth aspects of the present invention is provided thereon with a release layer, a material of the release layer is not particularly limited as long as it has a good releasing property. As the material of the release layer, there may be used either those resins containing a curable silicone resin as a main component, or modified silicone-type resins obtained by graft-polymerizing a silicone resin with an organic resin such as an urethane resin, an epoxy resin and an alkyd resin. Among these materials, from the standpoint of good mold releasability, preferred are the resins containing a curable silicone resin as a main component.

The curable silicone resin usable as the material of the release layer may be of any curing-reactive type such as a solvent addition type, a solvent condensation type, a solvent ultraviolet-curable type, a solvent-free addition type, a solvent-free condensation type, a solvent-free ultraviolet-curable type and a solvent-free electron beam-curable type.

EXAMPLES

The present invention is described in more detail by Examples. However, these Examples are only illustrative and not intended to limit the scope of the present invention. In the followings, Examples 1-1 to 1-4 and Reference Examples 1-1 to 1-3 are concerned with the invention described in the first aspect of the present invention; Examples 2-1 to 2-5 and Reference Examples 2-1 to 2-3 are concerned with the invention described in the second aspect of the present invention; Examples 3-1 to 3-5 and Reference Examples 3-1 to 3-3 are concerned with the invention described in the third aspect of the present invention; Examples 4-1 to 4-5 and Reference Examples 4-1 to 4-3 are concerned with the invention described in the fourth aspect of the present invention; and Examples 5-1 to 5-4 and Reference Examples 5-1 to 5-3 are concerned with the invention described in the fifth aspect of the present invention. Meanwhile, the term "part(s)" used in Examples and Reference Examples represents "part(s) by weight". Further, the methods for measuring various properties which are used in the present invention are as follows.

(1) Measurement of intrinsic viscosity of polyester:

One gram of a polyester from which other polymer components incompatible with the polyester and pigments were removed, was accurately weighed, and mixed with and dissolved in 100 mL of a mixed solvent containing phenol and tetrachloroethane at a weight ratio of 50:50, and a viscosity of the resultant solution was measured at 30°C.

(2) Average particle size (d50):

Using a centrifugal precipitation type particle size distribution measuring apparatus "SA-CP3 Model" manufactured by Shimadzu Seisakusho Co., Ltd., the particle size was measured by a sedimentation method according to Stokes' Resistance Rule.

(3) Content of oligomers (cyclic trimers) in polyester film layer:

A given amount of a polyester layer was dissolved in a mixed solution containing chloroform and 1,1,1,3,3,3-hexafluoro-2-propanol at a mixing ratio of 3:2, and then reprecipitated with a mixed solvent containing chloroform and methanol at a mixing ratio of 2:1. The obtained reaction solution was filtered to remove linear polyethylene terephthalate therefrom, and then the resultant filtrate was evaporated using an evaporator to remove the solvent therefrom. The obtained precipitate was dissolved in a given amount of DMF. The obtained DMF solution was fed to a liquid chromatograph "LC-7A" manufactured by Shimadzu Corporation, to measure an amount of oligomers (cyclic trimers) contained in the polyester. The thus measured amount of the oligomers was divided by the amount of the polyester used for the measurement to determine the content of the oligomers (cyclic trimers) in the polyester film. In the liquid chromatography, the amount of the oligomers (cyclic trimers) contained in the polyester was determined from a ratio between a peak area of a standard sample and a peak area of the sample to be measured (absolute calibration method). The standard sample was prepared by dissolving oligomers (cyclic trimers) previously sampled and weighed in DMF (dimethylformamide) also weighed. Meanwhile, the liquid chromatography was conducted under the following conditions.

9

Table 1

Moving phase A: Acetonitrile
Moving phase B: 2% Acetic acid aqueous solution
Column: "MCI GEL ODS 1HU" manufactured by Mitsubishi Chemical Corp.
Column temperature: 40°C
Flow rate: 1 mL/min
Detecting wavelength: 254 nm

(4) Amount of oligomers precipitated on surface of film after treated with solvent:

Methyl ethyl ketone was coated onto the surface of a polyester film, and then dried at 120°C in a nitrogen atmosphere for 1 min in a hot air circulation oven. Thereafter, the polyester film was heat-treated at 180°C in a nitrogen atmosphere for 10 min in a hot air circulation oven. The surface of the thus heat-treated polyester film was contacted with DMF for 3 min to dissolve the oligomers precipitated thereon. Such a procedure may be conducted, for example, by the method described in "Elution Equipments" used in one-side surface elution method for an elution test according to a voluntary standard concerning food containers and packages made of synthetic resins such as polyolefins. Next, the thus obtained solution was controlled in concentration thereof by a dilution method, etc., if required, and then fed to a liquid chromatograph "LC-7A" manufactured by Shimadzu Corporation, to measure an amount of oligomers contained in DMF. The thus measured amount of the oligomers was divided by a surface area of the film contacted with DMF to determine an amount of oligomers per a unit surface area of the film ($mg/m^2$). The amount of the oligomers contained in DMF was determined from a ratio between a peak area of a standard sample and a peak area of the sample to be measured (absolute calibration method).

The standard sample was prepared by dissolving oligomers (cyclic trimers) previously sampled and weighed, in DMF also weighed. The concentration of the standard sample is preferably in the range of 0.001 to 0.01 mg/mL. The liquid chromatography was conducted under the following conditions.

Table 2

Moving phase A: Acetonitrile
Moving phase B: 2% Acetic acid aqueous solution
Column: "MCI GEL ODS 1HU" manufactured by Mitsubishi Chemical Corporation
Column temperature: 40°C
Flow rate: 1 mL/min
Detecting wavelength: 254 nm

(5) Film haze ($H_0$, H, ΔH):

The polyester film was allowed to stand in an oven maintained at 180°C in a nitrogen atmosphere for 60 min. The thus heat-treated polyester film was subjected to measurement of a turbidity (haze) thereof (H) using an integrating sphere turbidity meter "NDH-20D" manufactured by Nippon Denshoku Kogyo Co., Ltd., according to JIS K7105. The difference in haze (ΔH) of the film between before and after the above heat treatment was calculated by subtracting the turbidity ($H_0$) of the film before the heat treatment from the turbidity (H) thereof as measured after the heat treatment.

(6) Quantitative determination of metal elements and phosphorus element in film:

Using a fluorescent X-ray analyzer "XRF-1500" manufactured by Shimadzu Corporation, contents of respective elements in a single-sheet film were measured by a film FP method under the conditions shown in Table 3 below. Meanwhile, a detection limit of the above method was usually about 1 ppm.

Table 3

|  | Sb | Ti | P |
|---|---|---|---|
| X-ray tube target | Rh 4.0 kW | Rh 4.0 kW | Rh 4.0 kW |
| Voltage (kV) | 40 | 40 | 40 |

(continued)

|  | Sb | Ti | P |
|---|---|---|---|
| Current (mA) | 95 | 95 | 95 |
| Analyzing crystal | LiF | LiF | Ge |
| Detector | FPC | FPC | FPC |
| 2θ (deg) | 117.34 | 86.14 | 141.03 |
| Measuring time (sec): 2 sec at each of 2 background positions | 40.0 | 40.0 | 40.0 |

(7) Measurement of change in orientation angle of film:

The polyester film was cut into sample films at its positions every 500 mm from a center towards opposite ends of the film along a width direction thereof as well as at the opposite end positions, and orientation angles of the respective sample films were measured using an automatic birefringence meter "KOBRA-21ADH" manufactured by Oji Keisokuki Co., Ltd., to determine a change in orientation angle of the film every 500 mm along a width direction thereof. Meanwhile, when calculating the change in orientation angle at the positions including the opposite end positions thereof, if the distance between the positions from which the respective sample films were cut, was less than 500 mm, the change in orientation angle every 500 mm at such a position was determined by proportional calculation. Next, the polyester film was cut along a length direction thereof into sample films having a length of 3 m. Specifically, 7 sample films were cut from the polyester film at its seven positions every 500 mm as a distance from a center of a width direction thereof along a length direction of the film (including opposite end positions) to determine an orientation angle of each position. Thus, the change in orientation angle every 500 mm in both the width and length directions of the polyester film was measured, and the maximum value of the change in orientation angle was regarded as the change in orientation angle of the polyester film. Upon the measurement, it is important that the orientation angles of all of the sample films were measured on the basis of the same reference axis. The reference axis may be optionally determined.

(8) Visual inspection property under Cross-Nicol:

The obtained polyester film was coated with a release agent composed of 100 parts of a curable silicone resin "KS-779H" produced by Shin-Etsu Kagaku Co., Ltd., 1 part of a curing agent "CAT-PL-8" produced by Shin-Etsu Kagaku Co., Ltd., and 2200 parts of a mixed solvent containing methyl ethyl ketone (MEK) and toluene, in a coating amount of 0.1 g/mm$^2$. The resultant coating layer was dried at 170°C for 10 sec to obtain a release film. The thus obtained release film was attached onto a polarizing film through an adhesive such that the width direction of the release film was parallel with an orientation axis of the polarizing film to form a polarizing plate. On the release film adhered to the polarizing film, another polarizing plate for inspection was laminated such that the width direction of the release film was perpendicular to an orientation axis of the polarizing plate for inspection. White light was irradiated from the side of the first polarizing plate, and the polarizing plate for inspection was visually observed by 10 inspectors to evaluate a visual inspection property of the film according to the following evaluation criteria. Meanwhile, upon the above measurement, sample films with A4 size were cut from positions of the polyester film corresponding to 10, 50 and 90% of the width of the polyester film as measured from each end of the film along the width direction, and subjected to the measurement.

Table 4
<Evaluation criteria for visual inspection property under Cross-Nicol>
(Good inspection property) → (Poor inspection property)
A > B > C > D > E

Among the above ratings, A, B and C have a practically acceptable level and can be used without problems.

(9) Recognizability of foreign matters:

One surface of the obtained polyester film was coated with a release agent composed of 100 parts of a curable silicone resin "KS-779H" produced by Shin-Etsu Kagaku Co., Ltd., 1 part of a curing agent "CAT-PL-8" produced by Shin-Etsu Kagaku Co., Ltd., and 2200 parts of a mixed solvent containing methyl ethyl ketone (MEK) and toluene, in a coating amount of 0.1 g/mm$^2$. The resultant coating layer was dried at 170°C for 10 sec to obtain a release film. The thus obtained release film was attached onto a polarizing film through a known acrylic adhesive such that the width direction of the release film was parallel with an orientation axis of the polarizing film to form a polarizing plate with the release film. Upon producing the polarizing plate, a black metal powder (foreign matters) having a particle size of not less than 50 $\mu$m was included between the adhesive and the polarizing film in an amount of 50 particles per m$^2$. On the release film of the thus formed polarizing plate in which the foreign matters were included, another polarizing plate for inspection was laminated such that the width direction of the release film was perpendicular to an orientation axis of the polarizing plate for inspection. White light was irradiated from the side of the first polarizing plate, and the polarizing plate for inspection was visually observed by 10 inspectors to examine whether or not the foreign matters included between the adhesive and the polarizing film were recognizable, and evaluate the observation results according to the following ratings. Meanwhile, the measurement was conducted using sample films cut from total 3 positions of the obtained polyester film including a center position and both end positions of the film, and the observation result at the position having the most excellent visual inspection property was regarded as a recognizability of foreign matters in the film.

<u><Evaluation ratings for recognizability for foreign matter in film></u>

(Good recognizability)$\rightarrow$(Poor recognizability)
A> B > C > D
Among the above ratings, A and B have a practically acceptable level and can be used without problems.

<u><Production of polyesters (A0) and (A1)></u>

100 parts by weight of dimethyl terephthalate and 60 parts by weight of ethyleneglycol as starting materials were charged together with tetrabutoxy titanate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was transferred to a polycondensation reaction vessel, and a slurry of ethyleneglycol containing silica particles having an average particle diameter of 2.5 $\mu$m was added thereto in such an amount that the content of the silica particles was 0.06% by weight based on the weight of the polyester, followed by subjecting the obtained mixture to polycondensation reaction for 4 hr.
More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.55. The resultant polymer was discharged under a nitrogen pressure from the reaction vessel, thereby obtaining chips of a polyester (A0). The thus obtained polyester (A0) had an intrinsic viscosity of 0.55. The resultant polyester chips were subjected to solid phase polymerization at 220°C, thereby obtaining a polyester (A1) having an intrinsic viscosity of 0.65.

<u><Production of polyester (B1)></u>

100 parts by weight of dimethyl terephthalate and 60 parts by weight of ethyleneglycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was transferred to a polycondensation reaction vessel, and orthophosphoric acid and then germanium dioxide were added thereto, followed by subjecting the obtained mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.63. The resultant polymer was discharged under a nitrogen pressure from the reaction vessel, thereby obtaining chips of a polyester (B1). It was confirmed that the thus obtained polyester (B1) had an intrinsic viscosity of 0.63.

<u>Example 1-1:</u>

A raw mixture obtained by blending 95 parts by weight of the polyester (A1) chips and 5 parts by weight of the polyester (B1) chips with each other, was melt-extruded at 290°C from a vented twin extruder, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 25 $\mu$m. As a result, it was confirmed that the thus obtained polyester film had an oligomer content of 0.64% by weight as well as antimony, titanium and phosphorus contents of 0 ppm (less than the lower detection limit), 5 ppm and 50 ppm, respectively. The oligomer content and the antimony, titanium and phosphorus contents of the films obtained in the respective Examples and Reference Examples as well as evaluation results thereof are shown together in the following Tables 6 and 7.

Example 1-2:

The same procedure as defined in <Production of polyesters (A0) and (A1)> was conducted except that the time for solid phase polymerization of the polyester (A0) was changed, thereby obtaining chips of a polyester (A2) having an intrinsic viscosity of 0.68. Next, the same procedure as defined in Example 1-1 was conducted that the polyester (A1) chips were replaced with the polyester (A2) chips, thereby obtaining a polyester film.

Example 1-3:

The same procedure as defined in Example 1-1 was conducted that only the polyester (A1) chips were used in place of the raw mixture obtained by blending 95 parts by weight of the polyester (A1) chips and 5 parts by weight of the polyester (B1) chips with each other, thereby obtaining a polyester film.

Example 1-4:

The same procedure as defined in Example 1-3 was conducted that the polyester (A2) chips were used in place of the polyester (A1) chips, thereby obtaining a polyester film.

Reference Example 1-1:

The same procedure as defined in <Production of polyester (B1)> was conducted except that the amount of orthophosphoric acid added was changed, thereby obtaining chips of a polyester (B2) having an intrinsic viscosity of 0.62. Next, the same procedure as defined in Example 1-1 was conducted except that the polyester (A2) chips and the polyester (B2) chips were used in place of the polyester (A1) chips and the polyester (B1) chips, respectively, thereby obtaining a polyester film. The thus obtained polyester film suffered from inclusion of foreign matters which would be caused by formation of gels, and therefore was slightly deteriorated in quality thereof. Therefore, the film was unusable in limited high-level applications.

Reference Example 1-2:

The same procedure as defined in <Production of polyester (A0)> was conducted except that the amount of tetrabutoxy titanate added was changed, thereby obtaining chips of a polyester (A4) having an intrinsic viscosity of 0.56. Next, the same procedure as defined in Example 1-1 was conducted except that the polyester (A4) chips were used in place of the polyester (A1) chips, thereby obtaining a polyester film.

Reference Example 1-3:

100 parts by weight of dimethyl terephthalate and 60 parts by weight of ethyleneglycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with ethyl acid phosphate and then transferred to a polycondensation reaction vessel. Then, a slurry of ethyleneglycol containing silica particles having an average particle diameter of 2.5 $\mu$m was added to the reactor in such an amount that the content of the silica particles was 0.06% by weight based on the weight of the polyester, and further antimony trioxide was added thereto, followed by subjecting the obtained mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.63. The resultant polymer was discharged under a nitrogen pressure from the reaction vessel, thereby obtaining chips of a polyester. It was confirmed that the thus obtained polyester had an intrinsic viscosity of 0.63. The obtained polyester chips were subjected to solid phase polymerization under vacuum at 220°C, thereby obtaining a polyester (C) having an intrinsic viscosity of 0.67.

The thus obtained polyester (C) was charged into a vented twin extruder and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 25 $\mu$m.

Table 6

| | Oligomer content in film (wt%) | Sb content (ppm) | Ti content (ppm) | P content (ppm) |
|---|---|---|---|---|
| Example 1-1 | 0.64 | 0 | 5 | 50 |
| Example 1-2 | 0.32 | 0 | 5 | 50 |
| Example 1-3 | 0.63 | 0 | 5 | 5 |
| Example 1-4 | 0.31 | 0 | 5 | 5 |
| Reference Example 1-1 | 0.82 | 0 | 5 | 350 |
| Reference Example 1-2 | 0.86 | 0 | 30 | 50 |
| Reference Example 1-3 | 0.45 | 300 | 0 | 120 |

Table 7

| | Oligomer content on surface of film after treated with solvent (mg/m$^2$) | $\Delta H$ |
|---|---|---|
| Example 1-1 | 0.35 | 0.63 |
| Example 1-2 | 0.10 | 0.18 |
| Example 1-3 | 0.68 | 1.40 |
| Example 1-4 | 0.68 | 0.91 |
| Reference Example 1-1 | 5.24 | 9.46 |
| Reference Example 1-2 | 5.33 | 6.97 |
| Reference Example 1-3 | 2.03 | 5.21 |

Example 2-1:

A raw mixture obtained by blending 95 parts by weight of the polyester (A1) chips and 5 parts by weight of the polyester (B1) chips with each other, was melt-extruded at 290°C from a vented twin extruder, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 25 $\mu$m. As a result, it was confirmed that the thus obtained polyester film had an oligomer content of 0.64% by weight as well as antimony, titanium and phosphorus contents of 0 ppm (less than the lower detection limit), 5 ppm and 50 ppm, respectively. The oligomer content and the antimony, titanium and phosphorus contents of the films obtained in the respective Examples and Reference Examples as well as evaluation results thereof are shown together in the following Tables 8 and 9.

Example 2-2:

The same procedure as defined in the production of polyesters (A0) and (A1) was conducted except that the time for solid phase polymerization of the polyester (A0) was changed, thereby obtaining chips of a polyester (A2) having an intrinsic viscosity of 0.67. Next, the same procedure as defined in Example 2-1 was conducted that the polyester (A1) chips were replaced with the polyester (A2) chips, thereby obtaining a polyester film.

Example 2-3:

The same procedure as defined in the production of polyesters (A0) and (A1) was conducted except that the time for solid phase polymerization of the polyester (A0) was changed, thereby obtaining chips of a polyester (A3) having an intrinsic viscosity of 0.68. Next, the same procedure as defined in Example 2-1 was conducted that the polyester (A1) chips were replaced with the polyester (A3) chips, thereby obtaining a polyester film.

Example 2-4:

The same procedure as defined in Example 2-1 was conducted that only the polyester (A1) chips were used in place of the raw mixture obtained by blending 95 parts by weight of the polyester (A1) chips and 5 parts by weight of the polyester (B1) chips with each other, thereby obtaining a polyester film.

Example 2-5:

The same procedure as defined in Example 2-4 was conducted that the polyester (A2) chips were used in place of the polyester (A1) chips, thereby obtaining a polyester film.

Reference Example 2-1:

The same procedure as defined in the production of polyester (B1) was conducted except that the amount of orthophosphoric acid added was changed, thereby obtaining chips of a polyester (B2) having an intrinsic viscosity of 0.62. Next, the same procedure as defined in Example 2-1 was conducted except that the polyester (A2) chips and the polyester (B2) chips were used in place of the polyester (A1) chips and the polyester (B1) chips, respectively, thereby obtaining a polyester film. The thus obtained polyester film suffered from inclusion of foreign matters which would be caused by formation of gels, and therefore was slightly deteriorated in quality thereof. Therefore, the film was unusable in limited high-level applications.

Reference Example 2-2:

The same procedure as defined in <Production of polyester (A0)> was conducted except that the amount of tetrabutoxy titanate added was changed, thereby obtaining chips of a polyester (A4) having an intrinsic viscosity of 0.56. Next, the same procedure as defined in Example 2-1 was conducted except that the polyester (A4) chips were used in place of the polyester (A1) chips, thereby obtaining a polyester film.

Reference Example 2-3:

100 parts by weight of dimethyl terephthalate and 60 parts by weight of ethyleneglycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with ethyl acid phosphate and then transferred to a polycondensation reaction vessel. Then, a slurry of ethyleneglycol containing silica particles having an average particle diameter of 2.5 $\mu$m was added to the reactor in such an amount that the content of the silica particles was 0.06% by weight based on the weight of the polyester, and further antimony trioxide was added thereto, followed by subjecting the obtained mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.63. The resultant polymer was discharged under a nitrogen pressure from the reaction vessel, thereby obtaining chips of a polyester. It was confirmed that the thus obtained polyester had an intrinsic viscosity of 0.63. The obtained polyester chips were subjected to solid phase polymerization under vacuum at 220°C, thereby obtaining a polyester (C) having an intrinsic viscosity of 0.67.
The thus obtained polyester (C) was charged into a vented twin extruder and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 25 $\mu$m.

Table 8

|  | Oligomer content in film (wt%) | Sb content (ppm) | Ti content (ppm) | P content (ppm) |
|---|---|---|---|---|
| Example 2-1 | 0.64 | 0 | 5 | 50 |
| Example 2-2 | 0.47 | 0 | 5 | 50 |
| Example 2-3 | 0.32 | 0 | 5 | 50 |
| Example 2-4 | 0.63 | 0 | 5 | 5 |
| Example 2-5 | 0.31 | 0 | 5 | 5 |
| Reference Example 2-1 | 0.82 | 0 | 5 | 350 |
| Reference Example 2-2 | 0.86 | 0 | 30 | 50 |
| Reference Example 2-3 | 0.45 | 300 | 0 | 120 |

Table 9

|  | Oligomer content on surface of film after treated with solvent (mg/m$^2$) | $\Delta$H |
|---|---|---|
| Example 2-1 | 0.35 | 0.63 |
| Example 2-2 | 0.28 | 0.49 |
| Example 2-3 | 0.10 | 0.18 |
| Example 2-4 | 0.68 | 1.40 |
| Example 2-5 | 0.68 | 0.91 |
| Reference Example 2-1 | 5.24 | 9.46 |
| Reference Example 2-2 | 5.33 | 6.97 |
| Reference Example 2-3 | 2.03 | 5.21 |

Example 3-1:

A raw mixture obtained by blending 95 parts by weight of the polyester (A1) chips and 5 parts by weight of the polyester (B1) chips with each other, was melt-extruded at 290°C from a vented twin extruder, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 25 $\mu$m. As a result, it was confirmed that the thus obtained polyester film had an oligomer content of 0.64% by weight as well as antimony, titanium and phosphorus contents of 0 ppm (less than the lower detection limit), 5 ppm and 50 ppm, respectively. The oligomer content and the antimony, titanium and phosphorus contents of the films obtained in the respective Examples and Reference Examples as well as evaluation results thereof are shown together in the following Tables 10 and 11.

Example 3-2:

The same procedure as defined in the production of polyesters (A0) and (A1) was conducted except that the time for solid phase polymerization of the polyester (A0) was changed, thereby obtaining chips of a polyester (A2) having an intrinsic viscosity of 0.67. Next, the same procedure as defined in Example 3-1 was conducted that the polyester (A1) chips were replaced with the polyester (A2) chips, thereby obtaining a polyester film.

Example 3-3:

The same procedure as defined in the production of polyesters (A0) and (A1) was conducted except that the time for solid phase polymerization of the polyester (A0) was changed, thereby obtaining chips of a polyester (A2) having an intrinsic viscosity of 0.68. Next, the same procedure as defined in Example 3-1 was conducted that the polyester (A1) chips were replaced with the polyester (A2) chips, thereby obtaining a polyester film.

Example 3-4:

The same procedure as defined in Example 3-1 was conducted that only the polyester (A1) chips were used in place of the raw mixture obtained by blending 95 parts by weight of the polyester (A1) chips and 5 parts by weight of the polyester (B1) chips with each other, thereby obtaining a polyester film.

Example 3-5:

The same procedure as defined in Example 3-4 was conducted that the polyester (A2) chips were used in place of the polyester (A1) chips, thereby obtaining a polyester film.

Reference Example 3-1:

The same procedure as defined in the production of polyester (B1) was conducted except that the amount of orthophosphoric acid added was changed, thereby obtaining chips of a polyester (B2) having an intrinsic viscosity of 0.62. Next, the same procedure as defined in Example 3-1 was conducted except that the polyester (A2) chips and the polyester (B2) chips were used in place of the polyester (A1) chips and the polyester (B1) chips, respectively, thereby obtaining a polyester film. The thus obtained polyester film suffered from inclusion of foreign matters which would be caused by formation of gels, and therefore was slightly deteriorated in quality thereof. Therefore, the film was unusable in limited high-level applications.

Reference Example 3-2:

The same procedure as defined in the production of polyester (A0) was conducted except that the amount of tetrabutoxy titanate added was changed, thereby obtaining chips of a polyester (A4) having an intrinsic viscosity of 0.56. Next, the same procedure as defined in Example 3-1 was conducted except that the polyester (A4) chips were used in place of the polyester (A1) chips, thereby obtaining a polyester film.

Reference Example 3-3:

100 parts by weight of dimethyl terephthalate and 60 parts by weight of ethyleneglycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with ethyl acid phosphate and then transferred to a polycondensation reaction vessel. Then, a slurry of ethyleneglycol containing silica particles having an average particle diameter of 2.5 $\mu$m was added to the reactor in such an amount that the content of the silica particles was 0.06% by weight based on the weight of the polyester, and further antimony trioxide was added thereto, followed by subjecting the obtained mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.63. The resultant polymer was discharged under a nitrogen pressure from the reaction vessel, thereby obtaining chips of a polyester. It was confirmed that the thus obtained polyester had an intrinsic viscosity of 0.63. The obtained polyester chips were subjected to solid phase polymerization under vacuum at 220°C, thereby obtaining a polyester (C) having an intrinsic viscosity of 0.67.

The thus obtained polyester (C) was charged into a vented twin extruder and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 38 μm.

Table 10

|  | Oligomer content in film (wt%) | Sb content (ppm) | Ti content (ppm) | P content (ppm) |
|---|---|---|---|---|
| Example 3-1 | 0.64 | 0 | 5 | 50 |
| Example 3-2 | 0.47 | 0 | 5 | 50 |
| Example 3-3 | 0.32 | 0 | 5 | 50 |
| Example 3-4 | 0.63 | 0 | 5 | 5 |
| Example 3-5 | 0.31 | 0 | 5 | 5 |
| Reference Example 3-1 | 0.82 | 0 | 5 | 350 |
| Reference Example 3-2 | 0.86 | 0 | 30 | 50 |
| Reference Example 3-3 | 0.45 | 300 | 0 | 120 |

Table 11

|  | Oligomer content on surface of film after treated with solvent (mg/m$^2$) | ΔH |
|---|---|---|
| Example 3-1 | 0.35 | 0.63 |
| Example 3-2 | 0.28 | 0.49 |
| Example 3-2 | 0.10 | 0.18 |
| Example 3-3 | 0.68 | 1.40 |
| Example 3-4 | 0.68 | 0.91 |
| Reference Example 3-1 | 5.24 | 9.46 |
| Reference Example 3-2 | 5.33 | 6.97 |
| Reference Example 3-3 | 2.03 | 5.21 |

Example 4-1:

A raw mixture obtained by blending 95 parts by weight of the polyester (A1) chips and 5 parts by weight of the polyester (B1) chips with each other, was melt-extruded at 290°C from a vented twin extruder, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 125 μm. As a result, it was confirmed that the thus obtained polyester film had an oligomer content of 0.64% by weight as well as antimony, titanium and phosphorus contents of 0 ppm (less than the lower detection limit), 5 ppm and 50 ppm, respectively. The oligomer content and the antimony, titanium and phosphorus contents of the films obtained in the respective Examples and Reference Examples as well as evaluation results thereof are shown together in the following Tables 12 and 13.

Example 4-2:

The same procedure as defined in the production of polyesters (A0) and (A1) was conducted except that the time for solid phase polymerization of the polyester (A0) was changed, thereby obtaining chips of a polyester (A2) having an intrinsic viscosity of 0.67. Next, the same procedure as defined in Example 4-1 was conducted that the polyester (A1) chips were replaced with the polyester (A2) chips, thereby obtaining a polyester film.

Example 4-3:

The same procedure as defined in the production of polyesters (A0) and (A1) was conducted except that the time for solid phase polymerization of the polyester (A0) was changed, thereby obtaining chips of a polyester (A3) having an intrinsic viscosity of 0.68. Next, the same procedure as defined in Example 4-1 was conducted that the polyester (A1) chips were replaced with the polyester (A3) chips, thereby obtaining a polyester film.

Example 4-4:

The same procedure as defined in Example 4-1 was conducted that only the polyester (A1) chips were used in place of the raw mixture obtained by blending 95 parts by weight of the polyester (A1) chips and 5 parts by weight of the polyester (B1) chips with each other, thereby obtaining a polyester film.

Example 4-5:

The same procedure as defined in Example 4-4 was conducted that the polyester (A2) chips were used in place of the polyester (A1) chips, thereby obtaining a polyester film.

Reference Example 4-1:

The same procedure as defined in <Production of polyester (B1)> was conducted except that the amount of orthophosphoric acid added was changed, thereby obtaining chips of a polyester (B2) having an intrinsic viscosity of 0.62. Next, the same procedure as defined in Example 4-1 was conducted except that the polyester (A2) chips and the polyester (B2) chips were used in place of the polyester (A1) chips and the polyester (B1) chips, respectively, thereby obtaining a polyester film. The thus obtained polyester film suffered from inclusion of foreign matters which would be caused by formation of gels, and therefore was slightly deteriorated in quality thereof. Therefore, the film was unusable in limited high-level applications.

Reference Example 4-2:

The same procedure as defined in <Production of polyester (A0)> was conducted except that the amount of tetrabutoxy titanate added was changed, thereby obtaining chips of a polyester (A4) having an intrinsic viscosity of 0.56. Next, the same procedure as defined in Example 4-1 was conducted except that the polyester (A4) chips were used in place of the polyester (A1) chips, thereby obtaining a polyester film.

Reference Example 4-3:

100 parts by weight of dimethyl terephthalate and 60 parts by weight of ethyleneglycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with ethyl acid phosphate and then transferred to a polycondensation reaction vessel. Then, a slurry of ethyleneglycol containing silica particles having an average particle diameter of 2.5 $\mu$m was added to the reactor in such an amount that the content of the silica particles was 0.06% by weight based on the weight of the polyester, and further antimony trioxide was added thereto, followed by subjecting the obtained mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.63. The resultant polymer was discharged under a nitrogen pressure from the reaction vessel, thereby obtaining chips of a polyester. It was confirmed that the thus obtained polyester had an intrinsic viscosity of 0.63. The obtained polyester chips were subjected to solid phase polymerization under vacuum at 220°C, thereby obtaining a polyester (C) having an intrinsic viscosity of 0.67.

The thus obtained polyester (C) was charged into a vented twin extruder and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 83°C and a stretch ratio of 3.7 times in a longitudinal direction thereof, and then introduced into a tenter where the sheet was further stretched at 110°C and a stretch ratio of 3.9 times in a lateral direction thereof, and further heat-treated at 220°C, thereby obtaining a polyester film having a thickness of 125 $\mu$m.

Table 12

|  | Oligomer content in film (wt%) | Sb content (ppm) | Ti content (ppm) | P content (ppm) |
|---|---|---|---|---|
| Example 4-1 | 0.64 | 0 | 5 | 50 |
| Example 4-2 | 0.47 | 0 | 5 | 50 |
| Example 4-3 | 0.32 | 0 | 5 | 50 |
| Example 4-4 | 0.63 | 0 | 5 | 5 |
| Example 4-5 | 0.31 | 0 | 5 | 5 |
| Reference Example 4-1 | 0.82 | 0 | 5 | 350 |
| Reference Example 4-2 | 0.86 | 0 | 30 | 50 |
| Reference Example 4-3 | 0.45 | 300 | 0 | 120 |

Table 13

|  | Oligomer content on surface of film after treated with solvent (mg/m$^2$) | ΔH |
|---|---|---|
| Example 4-1 | 0.35 | 0.63 |
| Example 4-2 | 0.28 | 0.49 |
| Example 4-3 | 0.10 | 0.18 |
| Example 4-4 | 0.68 | 1.40 |
| Example 4-5 | 0.68 | 0.91 |
| Reference Example 4-1 | 5.24 | 9.46 |
| Reference Example 4-2 | 5.33 | 6.97 |
| Reference Example 4-3 | 2.03 | 5.21 |

Example 5-1:

A raw mixture obtained by blending 95 parts by weight of the polyester (A1) chips and 5 parts by weight of the polyester (B1) chips with each other, was charged into a vented twin extruder and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 90°C and a stretch ratio of 2.8 times in a longitudinal direction thereof, and then introduced into a tenter where the sheet was further stretched at 120°C and a stretch ratio of 5.4 times in a lateral direction thereof, and further heat-treated at 200°C. Thereafter, the obtained stretched sheet was relaxed by 10% in a width direction thereof at 180°C, thereby obtaining a polyester film having a width of 3000 mm and a thickness of 38 μm. As a result, it was confirmed that the thus obtained polyester film had an oligomer content of 0.64% by weight as well as antimony, titanium and phosphorus contents of 0 ppm (less than the lower detection limit), 5 ppm and 50 ppm, respectively. The properties and other data of the films obtained in the respective Examples and Reference Examples are shown together in the following Tables 14 and 15.

Example 5-2:

The same procedure as defined in the production of polyesters (A0) and (A1) was conducted except that the time for solid phase polymerization of the polyester (A0) was changed, thereby obtaining chips of a polyester (A2) having an intrinsic viscosity of 0.64. Next, the same procedure as defined in Example 5-1 was conducted that the polyester (A1) chips were replaced with the polyester (A2) chips, thereby obtaining a polyester film.

Example 5-3:

The same procedure as defined in the production of polyesters (A0) and (A1) was conducted except that the time for solid phase polymerization of the polyester (A0) was changed, thereby obtaining chips of a polyester (A3) having an intrinsic viscosity of 0.67. Next, the same procedure as defined in Example 5-1 was conducted that the polyester (A1) chips were replaced with the polyester (A3) chips, thereby obtaining a polyester film.

Example 5-4:

The same procedure as defined in Example 5-1 was conducted that only the polyester (A2) chips were used in place of the raw mixture obtained by blending 95 parts by weight of the polyester (A1) chips and 5 parts by weight of the polyester (B1) chips with each other, thereby obtaining a polyester film.

Reference Example 5-1:

The same procedure as defined in <Production of polyester (B1)> was conducted except that the amount of orthophosphoric acid added was changed, thereby obtaining chips of a polyester (B2) having an intrinsic viscosity of 0.62.

A raw mixture obtained by blending 95 parts by weight of the polyester (A2) chips and 5 parts by weight of the polyester (B2) chips with each other, was charged into a vented twin extruder and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 90°C and a stretch ratio of 3.3 times in a longitudinal direction thereof, and then introduced into a tenter where the sheet was further stretched at 130°C and a stretch ratio of 4.2 times in a lateral direction thereof, and further heat-treated at 220°C. Thereafter, the obtained stretched sheet was relaxed by 10% in a width direction thereof at 180°C, thereby obtaining a polyester film having a width of 3000 mm and a thickness of 38 $\mu$m. The thus obtained polyester film suffered from inclusion of foreign matters which would be caused by formation of gelled products, and therefore was slightly deteriorated in quality thereof. Therefore, the film was unusable in limited high-level applications.

Reference Example 5-2:

The same procedure as defined in <Production of polyester (A0)> was conducted except that the amount of tetrabutoxy titanate added was changed, thereby obtaining chips of a polyester (A4) having an intrinsic viscosity of 0.56. Next, the same procedure as defined in Reference Example 5-1 was conducted except that the polyester (A4) chips and the polyester (B1) chips were used in place of the polyester (A2) chips and the polyester (B2) chips, respectively, thereby obtaining a polyester film.

Reference Example 5-3:

100 parts by weight of dimethyl terephthalate and 60 parts by weight of ethyleneglycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with ethyl acid phosphate and then transferred to a polycondensation reaction vessel. Then, a slurry of ethyleneglycol containing silica particles having an average particle diameter of 2.5 $\mu$m was added to the reactor in such an amount that the content of the silica particles was 0.06% by weight based on the weight of the polyester, and further antimony trioxide was added thereto, followed by subjecting the obtained mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.63. The resultant polymer was discharged under a nitrogen pressure from the reaction vessel, thereby obtaining chips of a polyester. It was confirmed that the thus obtained polyester had an intrinsic viscosity of 0.63. The same procedure as defined in Example 5-1 was conducted that only the polyester (C0) chips were used in place of the raw mixture obtained by blending 95 parts by weight of the polyester (A1) chips and 5 parts by weight of the polyester (B1) chips with each other, thereby obtaining a polyester film.

Reference Example 5-4:

The polyester (C0) obtained in Reference Example 5-3 was subjected to solid phase polymerization under vacuum at 220°C, thereby obtaining a polyester (C1) having an intrinsic viscosity of 0.85. Next, the same procedure as defined in Example 5-1 was conducted except that only the polyester (C1) chips were used in place of the raw mixture obtained by blending 95 parts by weight of the polyester (A1) chips and 5 parts by weight of the polyester (B1) chips with each other, thereby attempting to obtain a polyester film. However, upon the melt-extrusion, a filter pressure was considerably increased, and an excessive load was applied to the extruder, thereby failing to form the raw mixture into a film.

Table 14

|  | Examples | | | |
|---|---|---|---|---|
|  | 5-1 | 5-2 | 5-3 | 5-4 |
| Blending ratio between raw materials (wt%) | A1/B1 = 95/5 | A2/B1 = 95/5 | = A3/B1 = 95/5 | A2 = 100 |
| Longitudinal stretch ratio (-) | 2.8 | 2.8 | 2.8 | 2.8 |
| Longitudinal stretching temperature (°C) | 90 | 90 | 90 | 90 |
| Lateral stretch ratio (-) | 5.4 | 5.4 | 5.4 | 5.4 |
| Lateral stretching temperature (°C) | 120 | 120 | 120 | 120 |
| Main crystallization temperature (°C) | 200 | 200 | 200 | 200 |
| Sb content (ppm) | 0 | 0 | 0 | 0 |
| Ti content (ppm) | 5 | 5 | 5 | 5 |
| P content (ppm) | 50 | 50 | 50 | 50 |
| Oligomer content in film (wt%) | 0.64 | 0.47 | 0.32 | 0.63 |
| Amount of oligomer on surface of film (mg/m$^2$) | 0.35 | 0.28 | 0.10 | 0.68 |
| ΔH (%) | 0.63 | 0.49 | 0.18 | 1.40 |
| Change in orientation angle (°/500 mm) | 1.6 | 1.4 | 1.3 | 2.1 |
| Visual inspection property (-) | A | A | A | B |
| Recognizability of foreign matters (-) | A | A | A | B |

Table 15

|  | Reference Examples | | | |
|---|---|---|---|---|
|  | 5-1 | 5-2 | 5-3 | 5-4 |
| Blending ratio between raw materials (wt%) | A2/B2 = 95/5 | A4/B1 = 95/5 | C0 = 100 | C1 = 100 |
| Longitudinal stretch ratio (-) | 3.3 | 3.3 | 2.8 | Not formed into film |
| Longitudinal stretching temperature (°C) | 90 | 90 | 90 | |
| Lateral stretch ratio (-) | 4.2 | 4.2 | 5.4 | |
| Lateral stretching temperature (°C) | 130 | 130 | 120 | |
| Main crystallization temperature (°C) | 220 | 220 | 200 | |
| Sb content (ppm) | 0 | 0 | 300 | |
| Ti content (ppm) | 5 | 30 | 0 | |
| P content (ppm) | 350 | 50 | 120 | |
| Oligomer content in film (wt%) | 0.82 | 0.86 | 0.89 | |
| Amount of oligomer on surface of film (mg/m$^2$) | 5.24 | 5.33 | 9.97 | |
| ΔH (%) | 9.46 | 6.97 | 10.22 | |
| Change in orientation angle (°/500 mm) | 5.7 | 7.1 | 1.5 | |
| Visual inspection property (-) | D | D | A | |

(continued)

|  | Reference Examples | | | |
|---|---|---|---|---|
|  | 5-1 | 5-2 | 5-3 | 5-4 |
| Recognizability of foreign matters (-) | D | D | D |  |

Although the present invention is described above with respect to embodiments which are considered to be most practical and preferable at the present time, the present invention is not limited to these embodiments, and various changes and modifications will be appropriately made within the scope of claims and a whole of a specification of this application unless departing from the subject matter and concept of the present invention, and it should be construed that these changes and modifications are involved in the technical range of the present invention. Meanwhile, the present patent application is based on Japanese Patent Application Nos. 2004-249448 filed on August 30, 2004; 2004-263444 filed on September 10, 2004; 2004-263445 filed on September 10, 2004; 2004-263446 filed on September 10, 2004; and 2004-369007 filed on December 21, 2004, whole contents of which are incorporated herein by reference.

**Claims**

1. A release polyester film comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer.

2. A release polyester film for protecting a liquid crystal display panel, comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer.

3. A polyester film for a protective film, comprising a polyester layer containing a titanium compound and a phosphorus compound in amounts satisfying the following formulae (1) and (2) at the same time:

$$0 < W_{Ti} \leq 20 \qquad (1)$$

$$1 \leq W_P \leq 300 \qquad (2)$$

wherein $W_{Ti}$ represents a content (ppm) of a titanium element in the polyester layer; and $W_P$ represents a content (ppm) of a phosphorus element in the polyester layer.

4.  A polyester film for an optical film, comprising a polyester layer containing a titanium compound and a phosphorus compound in amounts satisfying the following formulae (1) and (2) at the same time:

$$0 \; < \; W_{Ti} \; \leq \; 20 \qquad (1)$$

$$1 \; \leq \; W_P \; \leq \; 300 \qquad (2)$$

wherein $W_{Ti}$ represents a content (ppm) of a titanium element in the polyester layer; and Wp represents a content (ppm) of a phosphorus element in the polyester layer.

5.  A polyester film for a release film, comprising a polyester layer containing a titanium compound and a phosphorus compound in amounts satisfying the following formulae (1) and (2) at the same time:

$$0 \; < \; W_{Ti} \; \leq \; 20 \qquad (1)$$

$$1 \; \leq \; W_P \; \leq \; 300 \qquad (2)$$

wherein $W_{Ti}$ represents a content (ppm) of a titanium element in the polyester layer; and $W_P$ represents a content (ppm) of a phosphorus element in the polyester layer,
a change in an orientation angle in the film being not more than 3°/500 mm.

<table>
<tr><td colspan="2" align="center">INTERNATIONAL SEARCH REPORT</td><td colspan="2">International application No.<br>PCT/JP2005/015692</td></tr>
</table>

A.   CLASSIFICATION OF SUBJECT MATTER
Int.Cl⁷  C08G63/85, B32B27/36

According to International Patent Classification (IPC) or to both national classification and IPC

B.   FIELDS SEARCHED

Minimum documentation searched (classification system followed by classification symbols)
Int.Cl⁷  C08G63/00-91

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2004-210992 A  (Teijin Ltd.),<br>29 July, 2004 (29.07.04),<br>Claims 1, 4, 5<br>(Family: none) | 1-5 |
| A | JP 2003-276142 A  (Teijin Dupont Film Kabushiki Kaisha),<br>30 September, 2003 (30.09.03),<br>Claims 1, 11<br>(Family: none) | 1-5 |
| A | JP 8-188704 A  (Teijin Ltd.),<br>23 July, 1996 (23.07.96),<br>Claim 1; Par. No. [0001]<br>(Family: none) | 1-5 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 September, 2005 (15.09.05) | Date of mailing of the international search report<br>04 October, 2005 (04.10.05) |
|---|---|
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003119271 A
- JP 2000338327 A
- JP 59595216 B
- JP 2004249448 A
- JP 2004263444 A
- JP 2004263445 A
- JP 2004263446 A
- JP 2004369007 A